# EUROPÄISCHE PATENTANMELDUNG

(11) **EP 0 864 594 A1**
(43) Veröffentlichungstag der Anmeldung: **16.09.1998**
(21) Anmeldenummer: 98810146.5
(22) Anmeldetag: 24.02.1998
(51) Int. Cl.: C08G 59/06, C08G 59/62

(54) **Alpha-Glykolgruppen enthaltende Glycidylverbindungen**

(30) Priorität: 06.03.1997 CH 528/97
(71) Anmelder: Ciba Specialty Chemicals Holding Inc., 4057 Basel (CH)
(72) Erfinder: Finter, Jürgen, 79102 Freiburg (DE); Frischinger, Isabelle, 68640 Riespach (FR)

(57) **Zusammenfassung**

Bei Raumtemperatur feste, mit Bisphenolen vorverlängerte und α-Glykolgruppen enthaltende Glycidylverbindungen der Formel I 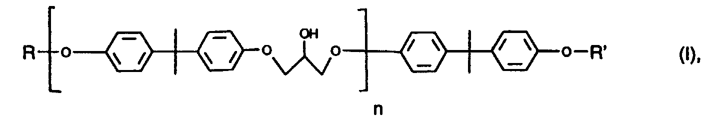 worin R und R' unabhängig voneinander je für einen Rest der Formeln 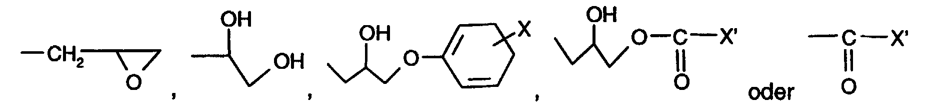 stehen, wobei X ein Wasserstoffatom, Alkyl, Alkoxy oder Halogenatom und X' einen aliphatischen oder aromatischen Rest bedeuten, und wobei 0,5 bis 20 Mol% der Reste R und R' für den Rest der Formel 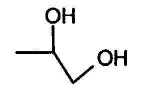 stehen, 1 bis 10 Mol% der Reste R und R' für einen Rest der Formeln 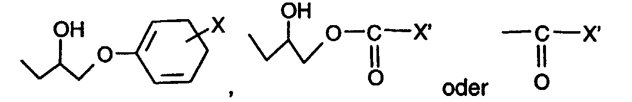 stehen und 70 bis 98,5 Mol% der Reste R und R' den Rest der Formel 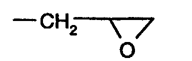 bedeuten, und n für eine Zahl von 1 bis 50 steht, eigenen sich zur Herstellung von Formstoffen und Beschichtungen, insbesondere zusammen mit Photoinitiatoren für die kationische Polymerisation als Pulverlacke, die mittels UV-Strahlen ausgehärtet werden können.

## Beschreibung

Die vorliegende Erfindung betrifft neue, bei Raumtemperatur feste, mit Bisphenol A vorverlängerte und α-Glykolgruppen enthaltende Glycidylverbindungen, härtbare Epoxidharzgemische enthaltend die neuen Glycidylverbindungen zusammen mit üblichen Härtungsmitteln für Epoxidharze, sowie vorzugsweise mit UV-Strahlen härtbare Pulverlacke enthaltend die neuen Glycidylverbindungen zusammen mit Photoinitiatoren für die kationische Polymerisation.

Über die Härtung von Pulverlacken auf Basis von einen Photoinitiator enthaltenden Epoxidharzen durch Bestrahlung ausgelöste kationische Polymerisation wurde von M. Wittig et al. an der RADTECH Europe Conference, Mai 2.-6., 1993, Conference Proceedings, Seite 533-544, berichtet. Sie bietet den Vorteil, dass feste Epoxidharze, die bei den gewünschten Temperaturen aufschmelzen, eingesetzt werden können. Im Vergleich zu der durch freie Radikale ausgelösten Polymerisation sind bei der durch Bestrahlung ausgelösten kationischen Polymerisation aber längere Härtungszeiten erforderlich, so dass wegen der niedrigen Photoempfindlichkeit hohe Initiatorkonzentrationen eingesetzt werden müssen. Auch lassen die mechanischen Eigenschaften der auf diese Weise ausgehärteten Beschichtungen noch zu wünschen übrig.

In der EP-A-0 667 381 werden Pulverlacke auf Basis von Polyglycidylethern und -estern beschrieben, die in Gegenwart von kationischen Photoinitiatoren und multifunktionellen nucleophilen Kettenübertragungsreagenzien mittels UV-Strahlen ausgehärtet werden. Als solche Kettenübertragungsreagenzien werden vorzugsweise primäre aliphatische Alkohole eingesetzt.

Es wurde nun überraschend gefunden, dass man bei der Härtung von Pulverlacken auf Basis von Polyglycidylethern mittels UV-Strahlen auf die Gegenwart von nucleophilen Kettenübertragungsreagenzien verzichten und die Härtung bei niedrigeren Belichtungstemperaturen vornehmen kann, wenn man als Epoxidharz mit Bisphenol A vorverlängerte und α-Glykolgruppen enthaltende Glycidylverbindungen einsetzt, deren Glycidylgruppen zudem teilweise mit einem Monophenol oder einer Monocarbonsäure verkappt sind. Durch den Verzicht von multifunktionellen nucleophilen Kettenübertragungsreagenzien erhält man eine grössere Homogenität der härtbaren Epoxidharzmischung, und an den ausgehärteten Beschichtungen wird ferner keine oder nur eine geringere Erniedrigung der Glasumwandlungstemperatur erhalten.

Gegenstand vorliegender Erfindung sind somit bei Raumtemperatur feste, mit Bisphenolen vorverlängerte und α-Glykolgruppen enthaltende Glycidylverbindungen der Formel I 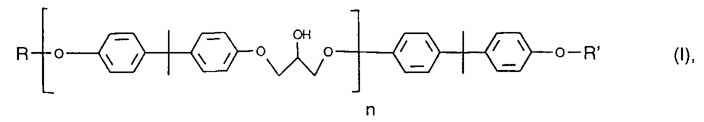 worin R und R' unabhängig voneinander je für einen Rest der Formeln 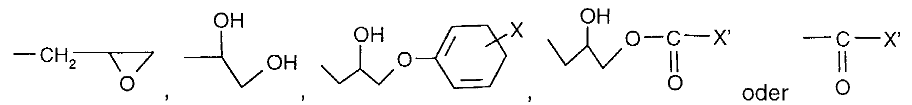 stehen, wobei X ein Wasserstoffatom, Alkyl, Alkoxy oder Halogenatom und X' einen aliphatischen oder aromatischen Rest bedeuten, und wobei 0,5 bis 20 Mol%, bevorzugt 0,5 bis 10 Mol%, der Reste R und R' für den Rest der Formel 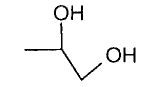 stehen, 1 bis 10 Mol% der Reste R und R' für einen Rest der Formeln 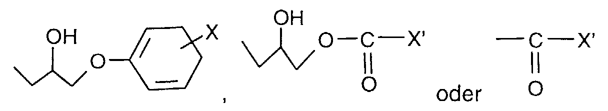 stehen und 70 bis 98,5 Mol%, bevorzugt 80 bis 98,5 Mol%, der Reste R und R' den Rest der Formel 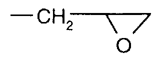 bedeuten, und n für eine Zahl von 1 bis 50 steht.

Bedeutet X ein Alkyl oder ein Alkoxy, so kann dieses geradkettig oder verzweigt sein und weist in der aliphatischen Kette im allgemeinen 1 bis 20 C-Atome, vorzugsweise 1 bis 12 C-Atome, auf.

Bedeutet X ein Halogenatom, so ist dieses vorzugsweise ein Chlor- oder Bromatom, inbesondere ein Chloratom.

Der aliphatische oder aromatische Rest X' leitet sich von einer aliphatischen oder aromatischen Monocarbonsäure ab, welcher im allgemeinen 1 bis 20 C-Atome im Rest X' aufweist.

In den erfindungsgemässen Glycidylverbindungen der Formell stehen vorzugsweise 1 bis 10 Mol% der Reste R und R' für einen Rest der Formel 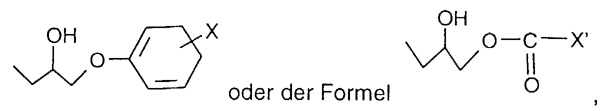 worin X die Bedeutung wie oben in Formel I hat und X' einen aromatischen Rest bedeutet.

Insbesondere stehen in den erfindungsgemässen Glycidylverbindungen der Formel I 1 bis 10 Mol% der Reste R und R' für einen Rest der Formel

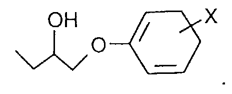

In den erfindungsgemässen Glycidylverbindungen bedeutet X in den Resten R und R' der Formel I vorzugsweise ein Alkyl mit 1 bis 10 C-Atomen, insbesondere 4-tert.-Butyl, 4-Nonyl oder 4-Isooctyl.

Die erfindungsgemässen Verbindungen der Formell, die in der Literatur noch nicht beschrieben worden sind, können beispielsweise hergestellt werden, indem man x+1 Mole eines Bisphenol A-diglycidylethers mit einem α-Glykolgruppengehalt von 1 bis 25 Mol%, bevorzugt 1 bis 15 Mol%, bezogen auf die Summe der Glycidylgruppen und α-Glykolgruppen, mit höchstens x Molen Bisphenol vorverlängert und 0,1 bis 10 Mol% der Glycidylethergruppen mit einem Monophenol oder einer aromatischen oder aliphatischen Monocarbonsäure verkappt.

Bisphenol A-diglycidylether mit einem definierten Gehalt an α-Glykolgruppen sind bekannt und können bespielweise nach dem in der EP-A-0452 265 beschrieben Verfahren hergestellt werden, indem man bei der Umsetzung von Bisphenol A mit Epihalogenhydrin diesem einem bestimmten Anteil an Glycidol zugibt. Eine weitere Methode zur Herstellung von Bisphenol A-diglycidylethern mit einem bestimmten Gehalt an α-Glykolgruppen besteht darin, dass man unter Druck und Stickstoffspülung einen Teil der Glycidylgruppen des Bisphenol A-diglycidylethers mit Wasser zu α-Glykolgruppen umsetzt.

Die neuen Diglycidylverbindungen der Formel I können mit den üblichen in der Epoxidharztechnik verwendeten Härtungsmitteln für Epoxidharze zu Formstoffen oder Beschichtungen ausgehärtet werden, wie beispielsweise Polycarbonsäuren und deren Anhydride, Polyamine, Polyaminoamide, aminogruppenhaltige Addukte, aliphatische oder aromatische Polyole oder katalytisch wirkende Härtungsmittel.

Gegenstand der vorliegenden Erfindung sind somit auch härtbare Epoxidharzzusammensetzungen, enthaltend
a) eine Glycidylverbindung der Formel I,
b) ein Härtungsmittel für Epoxidharze und gegebenenfalls
c) übliche in der Epoxidharztechnik verwendbare Füllstoffe.

Als geeignete Polycarbonsäuren seien beispielsweise genannt: Aliphatische Polycarbonsäuren, wie Maleinsäure, Oxalsäure, Bernsteinsäure, Nonyl- oder Dodecylbernsteinsäure, Glutarsäure, Adipinsäure, Pimelinsäure, Korksäure, Azelainsäure oder dimerisierte bzw. trimerisierte Linolsäure; cycloaliphatische Polycarbonsäuren, wie beispielsweise Tetrahydrophthalsäure, Methylendomethylentetrahydrophthalsäure, Hexachlorendomethylentetrahydrophthalsäure, 4-Methyltetrahydrophthalsäure, Hexahydrophthalsäure oder 4-Methylhexahydrophthalsäure, oder aromatische Polycarbonsäuren, wie beispielsweise Phthalsäure, Isophthalsäure, Terephthalsäure, Trimellitsäure, Pyromellitsäure oder Benzophenon-3,3',4,4'-tetracarbonsäure, sowie die Anhydride der genannten Polycarbonsäuren.

Als Polyamine können für die Härtung aliphatische, cycloaliphatische, aromatische oder heterocyclische Amine eingesetzt werden, wie beispielsweise Ethylendiamin, Propan-1,2-diamin, Propan-1,3-diamin, N,N-Diethylethylen-diamin, Hexamethylendiamin, Diethylentriamin, Triethylentetramin, Tetraethylenpentamin, N-(2-Hydroxyethyl)-, N-(2-Hydroxypropyl)- und N-(2-Cyanoethyl)-diethyltriamin, 2,2,4-Trimethylhexan-1 ,6-diamin, 2,3,3,-Trimethylhexan-1,6-diamin, N,N-Dimethyl- und N,N-Diethylpropan-1,3-diamin, Ethanolamin, m- und p-Phenylendiamin, Bis-(4-aminophenyl)-methan, Anilin-Formaldehyd-Harz, Bis-(4-aminophenyl)-sulfon, m-Xylylendiamin, Bis-(4-aminocyclohexyl)-methan, 2,2-Bis-(4-aminocyclohexyl)-propan, 2,2-Bis-(4-amino-3-methylcyclohexyl)-propan, 3-Aminomethyl-3,5,5-trimethylcyclohexylamin (Isophorondiamin) und N-(2-Aminoethyl)-piperazin, sowie als Polyaminoamide beispielsweise solche aus aliphatischen Polyaminen und dimerisierten oder trimerisierten Fettsäuren.

Als Polyaminoamide eignen sich beispielsweise die durch Umsetzung von Polycarbonsäuren, vorzugsweise von dimerisierten Fettsäuren, mit Polyaminen im molaren Überschuss erhaltenen Reaktionsprodukte, wie sie beispielsweise im Handbook of Epoxy Resins, 1967, Seiten 10-2 bis 10-10, von H. Lee und K. Neville beschrieben werden.

Aminogruppenhaltige Addukte aus einem Amin und einer Polyepoxidverbindung als Härtungsmittel für Epoxidharze sind ebenfalls bekannt und können für die Härtung der erfindungsgemässen Epoxidharzzusammensetzungen eingesetzt werden und werden beispielsweise durch Umsetzung von Epoxidharzen mit Polyaminen im äquivalenten Überschuss erhaltenen. Solche aminogruppenhaltige Addukte werden beispielsweise in den US-Patenten 3,538,184; 4,330,659; 4,500,582 und 4,540,750 näher beschrieben.

Als aliphatische Polyole für die Härtung der erfindungsgemässen Epoxidharzzusammensetzungen eignen sich beispielsweise Ethylenglykol, Diethylenglykol und höhere Poly-(oxyethylen)-glykole, Propan-1,2-diol oder Poly-(oxypropylen)-glykole, Propan-1,3-diol, Butan-1,4-diol, Poly-(oxytetramethylen)-glykole, Pentan-1,5-diol, Hexan-1,6-diol, Hexan-2,4,6-triol, Glycerin, 1,1,1-Trimethylolpropan, Pentaerythrit, Sorbit, N,N-Bis-(2-hydroxyethyl)-anilin oder p,p'-Bis-(2-hydroxyethylamino)-diphenylmethan. Als aromatische Polyole können für die Härtung beispielsweise einkernige Phenole, wie Resorcin, Hydrochinon, oder mehrkernige Phenole, wie Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie Novolake, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, beispielsweise solche der oben genannten Art, eingesetzt werden.

Es können auch katalytisch wirkende Härtungsmittel zur Härtung der erfindungsgemässen Epoxidharzzusammensetzungen verwendet werden, wie tertiäre Amine, beispielsweise 2,4,6-Tris-(dimethylaminomethyl)-phenol und andere Mannichbasen, N-Benzyldimethylamin und Triethanolamin; Alkalimetallalkoxide von Alkoholen, beispielsweise Na-alkoholat von 2,4-Dihydroxy-3-hydroxymethylpentan; Zinnsalze von Alkansäuren, beispielsweise Zinnoctanoat; Friedel-Crafts-Katalysatoren, beispielsweise Bortrifluorid und seine Komplexe, beispielsweise Bortrifluorid-Amin-Komplexe, und Chelate, die durch Umsetzung von Bortrifluorid mit zum Beispiel 1,3-Diketonen erhalten werden, Sulfoniumsalze, wie sie beispielsweise im EP-Patent 0 379 464 oder US-Patent 5,013.814, im EP-Patent 0 580 552 oder US-Patent 5,374,697 offenbart werden, oder heterocylische Ammoniumsalze, zum Beispiel Chinoliniumsalze gemischt mit Benzpinakol, wie sie beispielsweise in EP-A-0 066 543 erwähnt sind.

Vorzugsweise verwendet man als Härtungsmittel für die erfindungsgemässen Epoxidharzzusammensetzungen eine Polycarbonsäure oder deren Anhydrid, ein Polyamin, Dicyandiamid oder ein katalytisch härtendes Härtungsmittel.

Insbesondere verwendet man als Härtungsmittel für die erfindungsgemässen Epoxidharzzusammensetzungen ein Polycarbonsäureanhydrid oder ein katalytisch härtendes Härtungsmittel, wie beispielsweise ein Sulfoniumsalz.

Die Menge des eingesetzten Härtungsmittels richtet sich nach der chemischen Natur des Härtungsmittels und nach den gewünschten Eigenschaften der härtbaren Mischung und des gehärteten Produktes. Die maximale Menge kann vom Fachmann leicht ermittelt werden. Wenn das Härtungsmittel ein Amin ist, werden normalerweise 0,75 bis 1,25 Äquivalenten Aminwasserstoff pro 1 Epoxidäquivalent eingesetzt. Wenn Polycarbonsäuren oder ihre Anhydride eingesetzt werden, verwendet man gewöhnlich 0,4 bis 1,1 Äquivalente Carboxylgruppe bzw. Anhydridgruppe pro 1 Epoxidäquivalent. Bei Verwendung von Polyphenolen als Härtungsmittel setzt man 0,75 bis 1,25 phenolische Hydroxylgruppen pro 1 Epoxidäquivalent ein. Katalytisch wirkende Härtungsmittel werden allgemein in Mengen von 0,1 bis 40 Gewichtsteilen pro 100 Gewichtsteilen Epoxidharz eingesetzt.

Die erfindungsgemässen Epoxidharzzusammensetzungen können auch die in der Epoxidharztechnik üblichen Füllstoffe und Verstärkungsmaterilalien enthalten. Als Füllstoffe kommen beispielsweise die folgenden in Betracht: Mineralische und faserförmige Füllstoffe, wie Quarzmehl, Quarzgut, Aluminiumoxid, Glaspulver, Glimmer, Kaolin, Dolomit, Graphit oder Russ, sowie Kohlefasern und Textilfasern. Bevorzugte Füllstoffe sind Quarzmehl, Quarzgut, Aluminiumoxid oder Dolomit. Als Verstärkungsmaterialien eignen sich beispielsweise Glas- oder Kohlenstoffasern.

Die erfindungsgemässen Epoxidharzzusammensetzungen werden nach an sich bekannten Methoden, wie mit Hilfe bekannter Mischaggregate, beispielsweise Rührer, Kneter, Walzen oder im Falle fester Substanzen in Trockenmischern, hergestellt.

Die Härtung der erfindungsgemässen Epoxidharzzusammensetzungen zu Formkörpern, Beschichtungen oder dergleichen erfolgt in für die Epoxidharztechnik üblicher Weise, wie sie beispielsweise im "Handbook of Epoxy Resins", 1967, von H. Lee und K.Neville generell beschrieben wird.

Die erfindungsgemässen Epoxidharzzusammensetzugen eignen sich ausgezeichnet als Giessharze, Laminierharze, Klebstoffe, Pressmassen, Beschichtungsmassen sowie als Umhüllungssysteme für elektrische und elektronische Bauteile, vorzugsweise als Umhüllungssysteme oder Beschichtungsmassen sowie Giessharze, Laminierharze oder Klebstoffe.

Insbesondere eignen sich die erfindungsgemässen Glycidylverbindungen der Formel I als mit UV-Strahlen in Gegenwart von kationischen Photoinitiatoren vernetzbare Pulverlacke.

Gegenstand der Erfindung sind somit auch bei Raumtemperatur feste, mittels UV-Strahlen härtbare Zusammensetzungen, enthaltend
a) eine Glycidylverbindung der Formel I,
b) einen Photoinitiator für die kationische Polymerisation und gegebenenfalls
c) übliche Zusätze für Pulverlacke.

Photoinitiatoren für die kationische Polymerisation, beispielsweise Oniumsalze, die als Komponente b) in den erfindungsgemässen Zusammensetzung verwendet werden, sind bekannt, beispielsweise aus der EP-A 0 297 442 und EP-A 0 580 552.

Die erfindungsgemässen Zusammensetzungen enthalten die Photoinitiatoren für die kationische Polymerisation im allgemeinen in Mengen von 0,05 bis 3 Gew.-%, bezogen auf die Glycidylverbindung der Formel I.
Gegebenenfalls können die erfindungsgemässen Zusammensetzungen zusätzlich auch noch Sensilibisatoren, wie Anthracen, Anthracenderivate, Perylen oder andere merkernige Aromaten enthalten.

Vorzugsweise enthalten die erfindungsgemässen Zusammensetzungen als kationische Photoinitiatoren Sulfoniumsalze, insbesondere ein Sulfoniumsalz der Formel II 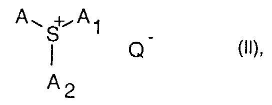 worin A, A₁ und A₂ gleiche oder verschiedene aliphatische, cycloaliphatische oder aromatische Reste darstellen, die gegebenenfalls einfach oder mehrfach substituiert sind und Heteroatome enthalten können, und wobei zwei der Reste A, A₁ und A₂ zu einem Ring oder Ringgebilde verknüpft sein können, und Q für ein komplexes Anion, wie beispielsweise BF₄⁻, FeCl₄⁻, PF₆⁻, SbF₆⁻, AsF₆⁻, SnCl₆⁻, SbCl₆⁻, BiCl₅⁻ oder SbF₅OH⁻, steht.

In der Formel II können A, A₁ und A₂ beispielsweise je für ein unsubstituiertes oder durch Halogen substituiertes C₁-C₁₂-Alkyl, wie zum Beispiel Methyl, Ethyl, n-Propyl, tert.-Butyl oder 4-Chlorbutyl, für einen cycloaliphatisches Rest, wie zum Beispiel Cyclohexyl oder Cyclopentyl, der gegebenenfalls durch Alkyl, Alkoxy oder Halogenatome substituiert sein kann, für einen aromatischen Rest, wie zum Beispiel Phenyl, Naphthyl, Methylphenyl, Methoxyphenyl, Chlorphenyl, Bromphenyl, Dichlorphenyl oder Dimethylphenyl, stehen oder zwei der Reste A, A₁ und A₂ können miteinander zu einem Ring, wie Tetramethylen oder Pentamethylen oder einem Ringgebilde, wie zum Beispiel 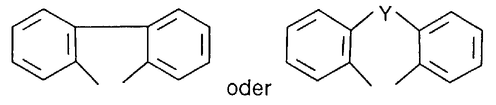 verbunden sein, worin Y für -O-, -CH₂-, -NH-, -CO-, -CH₂-, oder -S- steht.

Bevorzugt werden aromatische Sulfoniumsalze eingesetzt, insbesondere ein unsubstituiertes oder mit Phenylthiogruppen substituiertes Triarylsulfoniumhexafluorophosphat oder -antimonat.

Neben diesen genannten Photoinitiatoren sind auch übliche kationische Photoinitiatoren geeignet, wie beispielsweise Aryljodoniumsalze mit nicht nucleophilen Gegenionen, wie BF₄⁻, PF₆⁻, SbF₆⁻ oder die in EP-A-0 562 897 beschriebenen Systeme. Eine Übersicht über mögliche, zur kationischen Polymerisation von Epoxidharzen geeignete Photoinitiatoren wird von R.S. Davidson im Journal of Photochem. Photobiol. A; Chem., 73 (1993), Seite 81 bis 96, angegeben.

Als übliche Zusätze für Pulverlacke (c), die gegebenenfalls in den erfindungsgemässen Zusammensetzungen enthalten sein können, seien beispielsweise Farbstoffe, Pigmente, wie vorzugsweise TiO₂, Entgasungsmittel, vorzugsweise Benzoin, Verlaufsmittel, beispielsweise Polyvinylacetale, wie Polyvinylbutyral (Movital®B 30 der Firma HOECHST), Polyethylenglykol, Glycerin, Acryl-Mischpolymerisate, wie Modaflow® oder Acrylon®MFP der Firmen MONSANTO bzw. PROTEX, Antikratermittel oder Füllstoffe, insbesondere mineralische Füllstoffe, wie Quarz oder Baryt (Bariumsulfat), genannt.

Die erfindungsgemässen Zusammensetzungen stellen unter Lichtausschluss lagerstabile Gemische dar, deren Vernetzungsreaktion erst durch Licht initiiert wird. Vor der photoinduzierten kationischen Polymerisation der erfindungsgemässen Zusammensetzungen können diese bei erhöhter Temperatur, etwa 90 bis 180°C, aufgeschmolzen werden, ohne dass deren Latenz verloren geht.

Wie eingangs erwähnt, finden die erfindungsgemässen Zusammensetzungen vorzugsweise als Pulverlacke Anwendung. Sie können zweckmässig auf Teilchengrössen von kleiner als 100 µm mechanisch gemahlen werden und nach Tribo- oder Koronaaufladung auf dem zu beschichtenden Teil in einer homogenen Schicht elektrostatisch abgeschieden werden. Die Pulverschicht wird dann durch Erwärmung entweder in einem Umluftofen oder durch Strahlungswärme, wie kurzwellige oder mittelwellige Infrarotstrahlung, aufgeschmolzen.

Statt durch mechanisches Zerkleinern können die erfindungsgemässen Zusammensetzungen auch durch Schmelzsprühen direkt zu Pulvern verarbeitet werden. Dieser Prozess ist zum Beispiel in der internationalen Anmeldung WO 88/07414 beschrieben worden.

Die Vernetzungsreaktion wird durch Bestrahlung der aufgeschmolzenen Schicht mit aktinischer Strahlung bewirkt. Für die Bestrahlung können an sich beliebige geeignete Lichtquellen eingesetzt werden, die im Wellenlängenbereich von 300-400 nm genügend intensive Strahlung emittieren, beispielsweise Xenonlampen, Metallhalogenidlampen, UV-Argonlaser, frequenzverdoppelte Helium-Neon-Laser und besonders Quecksilberhochdruck-, Quecksilber-Xenon- und Quecksilbermitteldrucklampen. Auch Elektronenstrahlung kann für die Vernetzungsreaktion verwendet werden.

Vorzugsweise wird die aufgeschmolzene Schicht im Schmelzzustand bei erhöhter Temperatur bestrahlt. Es ist aber auch möglich, die aufgeschmolzene Schicht durch Abkühlung glasartig erstarren zu lassen, dann durch Belichtung zu vernetzen und durch thermische Nachbehandlung bei Temperaturen von beispielsweise über 90°C vollständig ausreagieren zu lassen.

Die Bestrahlung kann auch durch eine Maske bildmässig erfolgen. Werden die unbelichteten und unreagierten Bildteile beispielsweise durch Eintauchen in ein Lösungsmittel entfernt, so wird ein Reliefbild erhalten, das beispielsweise als Photoresist verwendet werden kann.

Gegenstand vorliegender Erfindung ist somit auch eine vernetze Beschichtung, die erhalten wird, indem man ein Pulver aus einer festen, mittels UV-Strahlen härtbaren Zusammensetzungen, enthaltend
a) eine Glycidylverbindung der Formel I,
b) einen Photoinitiator für die kationische Polymerisation und gegebenenfalls
c) übliche Zusätze für Pulverlacke elektrostatisch auf eine Unterlage aufsprüht, die Beschichtung durch Wärmezufuhr, wie beispielsweise Umluft oder IR-Strahlung, aufschmilzt und anschliessend durch UV-Strahlen vernetzt oder vorvernetzt und gegebenenfalls durch Wärme nachvernetzt.

Die erfindungsgemässen Zusammensetzungen eignen sich auch zur Beschichtung von wärmeempfindlichen Substraten, wie Kunststoffe, Holz oder Papier, oder auch zur Herstellung von dreidimensionalen Formkörpern durch Bestrahlen der erfindungsgemässen Epoxidharzzusammensetzungen mit einem Abtast-Laser im Wirbelbett. Die erfindungsgemässen Zusammensetzungen können als Pulver auch im Trockensiebdruck eingesetzt werden. Das Trockensiebdruck-verfahren sowie die Vorrichtung zu seiner Durchführung werden beispielsweise in der PCT-Anmeldung WO 92/03295 näher beschrieben.

Ebenfalls geeignet sind die erfindungsgemässen Zusammensetzungen für die Verwendung in thermographischen Druckverfahren. Ein derartiges Verfahren, bei dem thermoplastische Pulver, wie Polyamidpulver, eingesetzt werden, wird zum Beispiel von W.B. Neuberg im US-Patent 3,911,160 beschrieben. Beim thermographischen Druckverfahren werden UV-vernetzbare Pulver auf die noch feuchte Druckfarbe aufgebracht, und anschliessend wird das überschüssige Pulver abgeblasen. Das auf der Druckfarbe haftende Pulver wird durch Hitze, bevorzugt IR-Strahlung, aufgeschmolzen und anschliessend durch Bestrahlung mittel UV-Strahlen vernetzt.

### Beispiel A: Herstellung eines Epoxidharzgemisches mit α-Glykolgruppen

In einem 2,5-Liter Druckreaktor werden 1000g flüssiger Bisphenol A-diglycidylethyer mit einem Epoxidgehalt von 5,81 Äquivalenten/kg eingewogen und unter Stickstoffspülung auf 180°C erhitzt. Man gibt dann 50 g reines, mit Stickstoff entgastes Wasser zu. Der Inhalt des geschlossenen Reaktors wird unter Rühren auf 170°C abgekühlt und anschliessend 2 Stunden bei dieser Temperatur gerührt.
Man erhält ein flüssiges Epoxidharz mit einem Epoxidgehalt von 5,06 Äquivalenten/kg und einem α-Glykolgehalt von 0,14 Äquivalenten/kg, bestimmt durch Perjodattitration nach der Methode von G.A. Stenmark, beschrieben in Annalen der Chemie **30** (1958), 301.

### Beispiel 1

710,7 g (3,60 Mol Epoxidgruppen und 0,10 Mol α-Glykolgruppen) flüssiger Bisphenol A-diglycidylether gemäss Beispiel A werden in einem Dreihalskolben, ausgerüstet mit Rührer, Stickstoffeinlass und Ölbad, vorgelegt und auf 100°C Innentemperatur erhitzt. Dann werden 218,2 g Bisphenol A (1,914 Mol) und 71,1 g ( 0,323 Mol) 4-Nonylphenol portionenweise zugegeben. Nachdem alles gelöst ist, werden 2,9 g einer 1%-igen Lösung von 2-Phenylimidazol in n-Butanol zugegeben, und man erhöht die Aussentemperatur auf 180°C. Ab 160°C Innentemperatur setzt eine Exothermie ein. Nach 2 Stunden (h) bei 180°C Aussentemperatur und 178°C Innentemperatur weist das Reaktionsharz einen Epoxidgehalt von 1,50 Äquivalenten/kg auf. Die klare Harzschmelze wird auf ein Metallblech ausgetragen und abgekühlt.

| | |
|---|---|
| Das Harz weist folgende Eigenschaften auf: | |
| Erweichungstemperatur (Tropfpunktgerät, Mettler) | 84°C |
| Glasumwandlungstemperatur (DSC-Gerät, Aufheizrate: 10°C/min) | 41°C |
| Lösungsviskosität (40%-ige Lösung in Butylcarbitol) | 2,8•10⁻¹ Pa•s |
| Epoxidgehalt | 1,33 Äquivalente/kg |
| α-Glykolgehalt | 0,1 Äquivalente/kg |
| | (= 3,15 Mol%) |

### Beispiele 2-7

Gemäss der Arbeitsweise in Beispiel 1 werden feste Epoxidharze aus flüssigem Bisphenol A-diglycidylether gemäss Beispiel A (BDE), Bisphenol A (Bis-A) und einem X-subtsituierten Phenol (X-Phenol) hergestellt. Die Mengen der verwendeten Verbindungen sind in Tabelle 1 angegeben.

Die Eigenschaften der erhaltenen Harze, die wie im Beispiel 1 bestimmt wurden, wie Lösungsviskosität (40%-ige Lösung in Butylcarbitol) bei 40°C (L-Visk), Epoxidgehalt (EG), Erweichungstemperatur (ET), Glasumwandlungstempertur (Tg) und α-Glykolgehalt (a-Glykol) sind in Tabelle 2 angegeben.

**Tabelle 1**

| Beispiel | BDE [g] | Bis-A [g] | X-Phenol [X] | R-Phenol [g] |
|---|---|---|---|---|
| 2 | 722,6 | 205,1 | 4-Nonyl | 72,3 |
| 3 | 704,3 | 225,3 | 4-Nonyl | 70,4 |
| 4 | 729,6 | 219,3 | 4-tert.-Butyl | 51,1 |
| 5 | 715,8 | 234,1 | 4-tert.-Butyl | 50,1 |
| 6 | 717,9 | 231,8 | 4-tert.-Butyl | 50,3 |

**Tabelle 2**

| Beispiel | L-Visk [Pa•s] | EG [val/kg] | ET [°C] | Tg [°C] | α-Glykol [Mol%] |
|---|---|---|---|---|---|
| 2 | 2,2•10⁻¹ | 1,5 | 79 | 37 | 3,21 |
| 3 | 2,85•10⁻¹ | 1,4 | 85 | 47 | 3,10 |
| 4 | 2,75•10⁻¹ | 1,4 | 85 | 46 | 3,15 |
| 5 | 2,8•10⁻¹ | 1,41 | 87 | 46 | 3,07 |
| 6 | 3,0•10⁻¹ | 1,4 | 88 | 46 | 3,08 |

### Anwendungsbeispiele I - IV

Jeweils 29,66 g des in den Beispielen 1, 2, 3 und 5 hergestellten festen Epoxidharzes werden bei 150°C geschmolzen, und unter Rühren werden darin 0,35 g der Photoinitiatorlösung Cyracure UV-I®6974 (Lösung eines Triarylsulfoniumhexafluoroantimonates in Propylencarbonat) der Firma Union Carbide gelöst. Die Schmelze wird auf ein Metallblech gegossen und durch Abschrecken schnell abgekühlt. An jeweils 5 bis 10 mg des Rohproduktes wird die Reaktivität mittels der Photo-DSC-Methode bestimmt, indem diese auf eine vorgewählte Temperatur, 90°C und 110°C, aufgeheizt und dann isotherm bei dieser Temperatur 12 Minuten (min) mit UV-Licht einer Intensität von 2 mW/cm² belichtet wird, wobei die Reaktionsenthalpie (ΔH ₑₓₒₜₕₑᵣₘ) gemessen wird (1. Scan). Anschliessend wird an dieser Probe mittels einer dynamisch-thermischen Nachhärtung zwischen 0-150°C geprüft, ob die Probe vollständig ausgehärtet ist oder eine weitere Reaktionsenthalpie (ΔH ₑₓₒₜₕₑᵣₘ) feststellbar ist (2. Scan) . An den bei 90°C und 100°C ausgehärten Proben wird der Tg-Wert ermittelt. Die erhaltenen Werte sind in Tabelle 3 angegeben.

**Tabelle 3**

| Anwendungsbeispiel | Epoxidharz aus Beispiel | 90°C | | 110°C | | Tg | |
|---|---|---|---|---|---|---|---|
| | | 1.Scan | 2.Scan | 1.Scan | 2.Scan | 90°C | 110°C |
| | | [kJ/val Epoxid] | | [kJ/val Epoxid] | | [°C] | [°C] |
| I | 1 | 86,0 | 0,0 | 92,0 | 0,0 | 92,9 | 96,9 |
| II | 2 | 87,1 | 0,0 | 87,8 | 0,0 | 100,0 | 89,4 |
| III | 3 | 82,2 | 0,0 | 87,0 | 0,0 | 94,4 | 93,1 |
| IV | 5 | 88,9 | 0,0 | 90,2 | 0,0 | 100,0 | 103,6 |

## Patentansprüche

1. Bei Raumtemperatur feste, mit Bisphenolen vorverlängerte und α-Glykolgruppen enthaltende Glycidylverbindungen der Formell 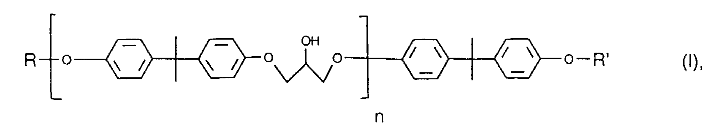 worin R und R' unabhängig voneinander je für einen Rest der Formeln 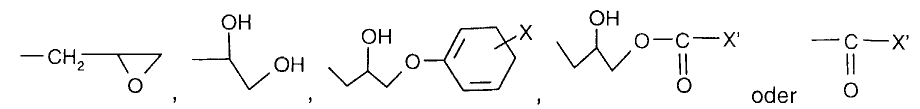 stehen, wobei X ein Wasserstoffatom, Alkyl, Alkoxy oder Halogenatom und X' einen aliphatischen oder aromatischen Rest bedeuten, und wobei 0,5 bis 20 Mol% der Reste R und R' für den Rest der Formel 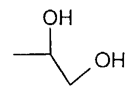 stehen, 1 bis 10 Mol% der Reste R und R' für einen Rest der Formeln 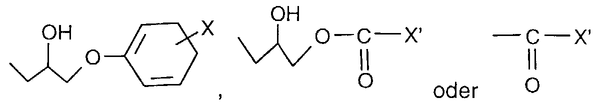 stehen und 70 bis 98,5 Mol% der Reste R und R' den Rest der Formel 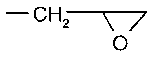 bedeuten, und n für eine Zahl von 1 bis 50 steht.

2. Glycidylverbindungen gemäss Anspruch 1, dadurch gekennzeichnet, dass 1 bis 10 Mol% der Reste R und R' in Formel I für einen Rest der Formel 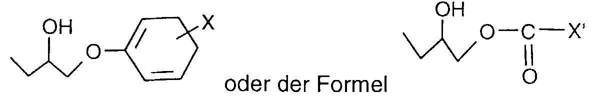 stehen, worin X die Bedeutung wie in Anspruch 1 hat und X' einen aromatischen Rest bedeutet.

3. Glycidylverbindungen gemäss Anspruch 1, dadurch gekennzeichnet, dass 1 bis 10 Mol% der Reste R und R' in Formel I für einen Rest der Formel 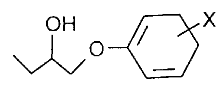 steht.

4. Glycidylverbindungen gemäss Anspruch 3, dadurch gekennzeichnet, dass X in der angegebenen Formel für ein Alkyl mit 1 bis 10 C-Atomen steht.

5. Glycidylverbindungen gemäss Anspruch 3, dadurch gekennzeichnet, dass X in der angegebenen Formel für 4-tert.-Butyl, 4-Nonyl oder 4-Isooctyl steht.

6. Verfahren zur Herstellung von bei Raumtemperatur festen, vorverlängerten, α-Glykolgruppen aufweisenden Glycidylverbindungen der Formel I 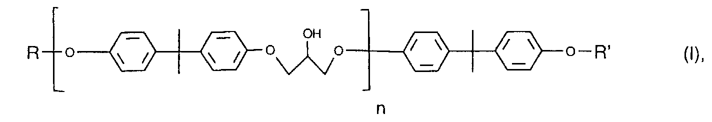 worin R und R' die gleiche Bedeutung wie im Anspruch 1 haben, dadurch gekennzeichnet, dass man x+1 Mole eines Bisphenol A-diglycidylethers mit einem α-Glykolgruppengehalt von 1-25 Mol%, bezogen auf die Summe der Glycidylgruppen und α-Glykolgruppen, mit höchstens x Molen Bisphenol A vorverlängert und 0,1 bis 10 Mol% der Glycidylethergruppen mit einer aromatischen oder aliphatischen Monocarbonsäure oder einem Monophenol verkappt.

7. Härtbare Epoxidharzzusammensetzungen, enthaltend
a) eine Glycidylverbindung der Formel I,
b) ein Härtungsmittel für Epoxidharze und gegebenenfalls
c) übliche in der Epoxidharztechnik verwendbare Füllstoffe.

8. Epoxidharzzusammensetzungen gemäss Anspruch 7, enthaltend als Härtungsmittel b) eine Polycarbonsäure oder deren Anhydrid.

9. Bei Raumtemperatur feste, mittels UV-Strahlen härtbare Zusammensetzungen, enthaltend
a) eine Glycidylverbindung der Formel I,
b) einen Photoinitiator für die kationische Polymerisation und gegebenenfalls
c) übliche Zusätze für Pulverlacke.

10. Zusammensetzungen gemäss Anspruch 9, enthaltend als Komponente b) ein Sulfoniumsalz.

11. Zusammensetzungen gemäss Anspruch 9, enthaltend als Komponente b) ein Triarylsulfoniumsalz.

12. Zusammensetzungen gemäss Anspruch 9, enthaltend als Komponente b) ein Triarylsulfoniumhexafluorophosphat oder -antimonat.

13. Verwendung der Zusammensetzung gemäss Anspruch 9 als Pulverlack.

14. Vernetze Beschichtung, die erhalten wird, indem man ein Pulver aus einer festen Zusammensetzung gemäss Anspruch 9 elektrostatisch auf eine Unterlage aufsprüht, die Beschichtung durch Wärmezufuhr aufschmilzt und anschliessend durch UV-Strahlen und gegebenenfalls durch Wärme vernetzt.
